# EUROPEAN PATENT APPLICATION

(11) **EP 1 983 318 A1**
(43) Date of publication of application: **22.10.2008**
(21) Application number: 07704755.3
(22) Date of filing: 18.01.2007
(51) Int. Cl.: G01J 9/00

(54) **WAVEFRONT ABERRATION AND DISTANCE MEASUREMENT PHASE CAMERA**

(30) Priority: 20.01.2006 ES 200600210
(71) Applicant: Universidad de la Laguna, 38207 La Laguna- Santa Cruz De Tenerife (ES)
(72) Inventor: RODRIGUEZ RAMOS, José Manuel, E-38203 La Laguna, Tenerife (ES); ROSA GONZÁLEZ, Fernando, E-38296 La Laguna, Tenerife (ES); MARICHAL-HERNÁNDEZ, José Gil, E-38108 S/C de Tenerife, Tenerife (ES)
(74) Representative: ABG Patentes, S.L.
(86) International application number: PCT/ES2007/000046
(87) International publication number: WO 2007/082975

(57) **Abstract**

A system consisting of a phase camera with microlenses placed in the focal point of a converging lens, wherein the camera data is processed using a combined Fourier "Slice" and fast Fourier transform edge detection technique providing both a three-dimensional wavefront map and a real scene depth map within a broad range of volumes.

The invention is suitable for use in any field where wavefronts need to be such as earth-based astronomical observation, ophthalmology, etc., as well as in fields requiring metrology, e.g. real scenes, CCD polishing, automobile mechanics, etc. The invention is particularly suitable for the case of atmospheric tomography using ELTs (large-diameter telescopes: 50 or 100 metres).

## Description

### Object of the Invention

The system of the invention consists of a phase camera with microlenses placed in the focal point of a converging lens, wherein the camera data is processed using a combined Fourier "Slice" and fast Fourier transform edge detection technique providing both a three-dimensional wavefront map and a real scene depth map within a broad range of volumes.

This invention is suitable for use in any field where wavefronts need to be determined, such as earth-based astronomical observation, ophthalmology, etc., as well as in fields requiring metrology, e.g. real scenes, CCD polishing, automobile mechanics, etc. The invention is particularly suitable for the case of atmospheric tomography using ELTs (large-diameter telescopes: 50 or 100 metres).

### Field of the Art

The invention is comprised in the field of optics and image processing.

### Background of the Invention

The present invention relates to both the need for obtaining a three-dimensional wavefront measurement associated to any optical problem in which image quality is essential (e.g. for diagnosis) and to the need for obtaining a sufficiently reliable and precise depth map within a broad range of volumes, from a few microns up to several kilometers.

Though the general approach can be applied to other fields, the analyses conducted focus on large aperture telescopes and on scene depth measurement.

### State of the Art

### Atmospheric tomography

For present large-diameter telescopes (GRANTECAN, Keck,...) and future giant telescopes (50 or 100 metres in diameter), the adaptive optics system has taken the course of measuring the three-dimensional distribution of the atmospheric phase by using a form of tomography called multiconjugate adaptive optics. The absence of a sufficient number of natural point sources in the sky, such that there is always one present within the field of vision of the object observed by the telescope, makes it necessary to use artificial point sources, e.g. Na stars (90 km high).

In order to correct the entire atmosphere which affects the light beam coming from the object in the sky (avoiding focal anisoplanatism), it is necessary to use several of these artificial stars (at least 5). In order to be generated, each of them requires a very high resolution and high powered pulsed laser, which translates into an incredibly expensive technology. Furthermore, after such a high cost, the multiconjugate adaptive optics can only measure the atmospheric phase associated to at most three horizontal turbulence layers (with three phase sensors measuring simultaneously), i.e., it scans a minute proportion of the three-dimensional cylinder affecting the image. They also recover an estimation of the phase with calculations that are so complicated that they seriously compromise the adaptive correction of the optical beam within the stability time of the atmosphere in the visible spectrum (10 ms).

The technique proposed herein will however allow:
- being limited to a single measurement and to a single sensor, within each atmospheric stability time.
- a recovery of the phase associated to each turbulent horizontal layer, i.e., tomography of the entire atmosphere, by means of un algorithm based on Fourier transform, which in and of itself is fast but can be accelerated with an intelligent adaptation thereof to graphics processing units (GPU) or to electronic hardware units, such as FPGA (Field Programmable Gate Arrays).
- preventing the need to use artificial laser stars, as it will recover in real time the image of the object upon its arrival to the Earth's atmosphere, since this new technique does not require calibration with a point signal to then be deconvoluted.

### Human eye tomography

The main interest in performing human eye tomography is essentially based on obtaining and having available for medical specialists a clear image of the retinal fundus of the patient, in order to make more reliable diagnoses. The aqueous humor, the vitreous humor and the lens behave in the eye as means which aberrate the image that can be obtained from the retinal fundus.

In fact, it does not require taking measurements as frequently as in the Earth's atmosphere (one every 10 ms), because it is a stable deformation; however it does require sufficient three-dimensional resolution to not only obtain a good image of the retinal fundus, but also to detect the spatial location of possible ocular lesions.

The few authors who, within the mentioned fields, have placed microlenses in the focal point do not use the Fourier "Slice" technique to take the measurement of the optical aberration, or to correct the image, or to obtain distances. In addition, the Fourier "Slice" technique associated to microlenses in the focal point has only been used to obtain focused photographs of real scenes within ranges of a few cubic metres of volume, with a quality that apparently exceeds the common depth of field technique. In summary, these contributions of other authors have nothing to do with the patent herein described.

### Description of the Invention

A single array of microlenses, forming an image on a CCD with sufficient resolution and placed in the focal point position of a converging lens allows taking tomographic measurements of target three-dimensional space.

The measurements are taken once only, i.e., a single image contains sufficient information to recover the three-dimensional environment. Such image can be understood as being made up of 4 dimensions: two coordinates on the CCD associated to the inside of each microlens and two other coordinates associated to the array of microlenses.

The proposed technique is based on the Generalized Fourier "Slice" Theorem. The image taken by the CCD is Fourier transform in four dimensions, then a rotation and "slice" operator is applied to it, which decides the depth at which the object will be recovered and reduces the problem of 4 dimensions to just 2. The objective of this invention is to find out the depths at which the objects are located; to that end, by working in the transform domain and identifying the objects with the edge detection algorithm (high spatial frequencies), it is possible to identify the components of the scene when it is previously known at what distance they are located.

In addition, a Shack-Hartmann sensor consists of an assembly of lenses placed in array form to form the same number of images in a two-dimensional detector. The displacement of each of them in relation to the position corresponding to a planar wavefront measures the local gradient of the wavefront. It is possible to recover the original wavefront through numerical processes. The proposed phase camera contains a Shack-Hartmann in the focal point of a converging lens, which is why the design is also a wavefront phase camera, but placed in the focal point of a lens, with a completely different data processing than what has been associated up until now to the Shack-Hartmann sensor. It is then possible to recover both depths and wavefront phases.

### Description of the Drawings

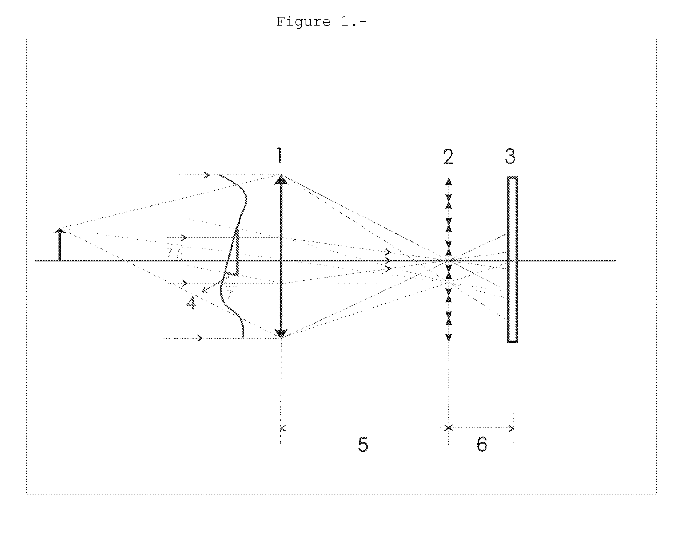

Figure 1: Diagram of the arrangement of the aperture lens (1), of the lenses (2), and of the CCD (3) forming the phase camera. (5) is the focal point of the converging lens. (6) is the focal of each microlens of the array of lenses. (7) is the local tilt angle of the wavefront. (4) is the optical path displacement experienced by the turbulent wavefront in relation to another one without aberration.

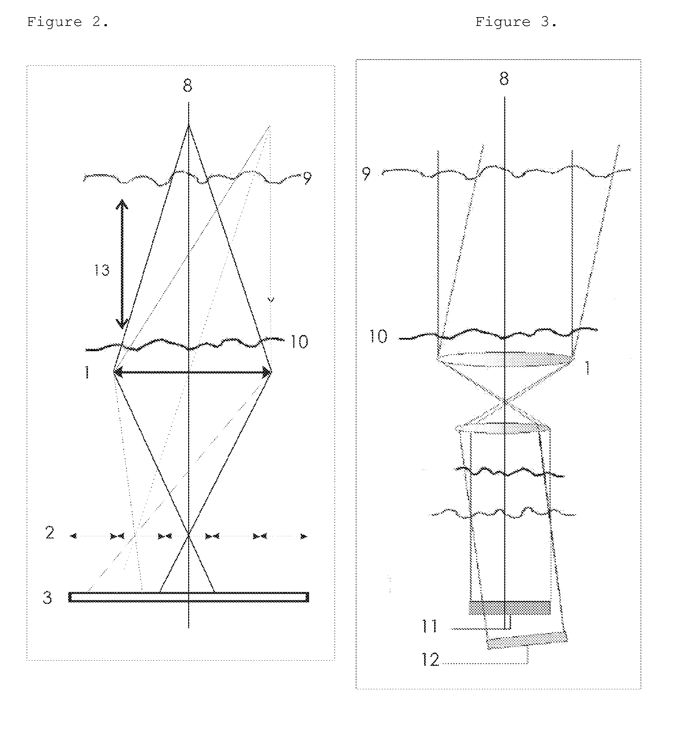

Figure 2: Conceptual diagram of the invention applied to a telescope with a large main mirror (1). Performing atmospheric tomography in the astrophysical observation of a star (8) with adaptive optics. The individual turbulence layers within the atmosphere correspond to (9) and (10). The phase camera allows scanning the complete cylinder of atmospheric turbulence (13) which affects the final image of the telescope.
Figure 3: Conceptual diagram of a classic astrophysical observation of a star (8) using the multiconjugate adaptive optics multiconjugated to two turbulence layers in the atmosphere (9) and (10). It can only recover a very small number of individual turbulence layers (three layers at most). (11) and (12) indicate the wavefront sensors conjugately associated to each turbulent layer. (1) corresponds to the telescope.

### Preferred Embodiment of the Invention

The particular case of an astrophysical observation with a telescope having a diameter exceeding the diameter of coherence r₀ of the atmosphere (approximately 20 cm in the visible spectrum) is considered. The turbulence of the atmosphere causes a loss of resolution in the image obtained with the telescope, i.e., loss of high spatial frequencies information. To prevent this loss, it is necessary to know the manner in which the atmospheric turbulence degrades the wavefront of the light coming from the star under study. Natural or artificial point starts which allow characterizing the deformation that the atmosphere introduces in the wavefront can be used to that end.

With classic multiconjugate adaptive optics (Figure 3), a wavefront phase sensor must be used for each deformable mirror conjugated to an individual turbulence layer, i.e. two different phase sensors (WFS) which must be aligned and placed in operation in parallel and in different positions of the optical axis. The complexity of the calculations and the need for velocity since the atmosphere changes every 10 milliseconds in the visible spectrum, makes it impossible to overcome the correction today at only three atmospheric turbulence layers.

With the phase camera having the design shown in Figure 1, and whose operation in this case is shown in Figure 2, only one sensor is used, which sensor is placed in a single position of the optical axis, and a single measurement, subsequently processed by means of the Fourier Slice technique, will allow obtaining the three-dimensional map of turbulences (wavefront phases) associated to the entire column of atmosphere which affects the observation with the telescope of the invention, as well as the altitude at which these turbulence layers are located.

## Claims

1. A wavefront aberration and distance measurement phase camera in different environments using Fourier Slice, **characterized by** microlenses placed in the focal point of a converging lens, and whose data are interpreted using a combined Fourier "Slice" and fast Fourier transform edge detection technique.

2. The wavefront aberration and distance measurement phase camera in different environments using Fourier Slice **characterized** according to claim 1, for obtaining the three-dimensional phase map associated to the assembly of atmospheric turbulent layers affecting an earth-based telescopic astronomical observation.

3. The wavefront aberration and distance measurement phase camera in different environments using Fourier Slice **characterized** according to claim 1, for obtaining the three-dimensional phase map associated to the group of turbulences affecting the ophthalmological observation of the retinal fundus of a patient.

4. The wavefront aberration and distance measurement phase camera in different environments using Fourier Slice **characterized** according to claim 1, for obtaining the three-dimensional phase map associated to the group of components of a real scene.

5. The wavefront aberration and distance measurement phase camera in different environments using Fourier Slice **characterized** according to claim 1, for obtaining the three-dimensional phase map associated to the surface of a CCD.

6. The wavefront aberration and distance measurement phase camera in different environments using Fourier Slice **characterized** according to claim 1, for obtaining the three-dimensional phase map associated to the surface of necessary mechanical parts in the automotive industry.

7. The wavefront aberration and distance measurement phase camera in different environments using Fourier Slice **characterized** according to claim 1, for obtaining the distance map associated to the group of atmospheric turbulent layers affecting an earth-based telescopic astronomical observation.

8. The wavefront aberration and distance measurement phase camera in different environments using Fourier Slice **characterized** according to claim 1, for obtaining the distance map associated to the group of turbulences affecting the ophthalmological observation of the retinal fundus of a patient.

9. The wavefront aberration and distance measurement phase camera in different environments using Fourier Slice **characterized** according to claim 1, for obtaining the depth map associated to the group of components of a scene real.

10. The wavefront aberration and distance measurement phase camera in different environments using Fourier Slice **characterized** according to claim 1, for obtaining the depth map (polishing) associated to the surface of a CCD.

11. The wavefront aberration and distance measurement phase camera in different environments using Fourier Slice **characterized** according to claim 1, for obtaining the depth map associated to the surface of necessary mechanical parts in the automotive industry.

12. A process for obtaining a depth and wavefront phases map by using a wavefront aberration and distance measurement phase camera in different environments using Fourier Slice, **characterized** according to claim 1, developed on GPU.

13. The process for obtaining a depth and wavefront phase map by using the wavefront aberration and distance measurement phase camera in different environments using Fourier Slice, **characterized** according to claim 1, developed on FPGA.

14. The process for obtaining a depth and wavefront phase map by using the wavefront aberration and distance measurement phase camera in different environments using Fourier Slice, **characterized** according to claim 1, developed on GPU in combination with FPGA.

15. A process to astronomically observe using adaptive optics with GPU-controlled deformable mirrors by using a wavefront aberration and distance measurement phase camera in different environments using Fourier Slice **characterized** according to claim 1, for obtaining the three-dimensional phase map associated to the group of atmospheric turbulent layers which affect an earth-based telescopic astronomical observation.

16. The process to astronomically observe using adaptive optics with FPGA-controlled deformable mirrors by using a wavefront aberration and distance measurement phase camera in different environments using Fourier Slice **characterized** according to claim 1, for obtaining the three-dimensional phase map associated to the group of atmospheric turbulent layers which affect an earth-based telescopic astronomical observation.

17. The process to astronomically observe using adaptive optics with GPU- and FPGA-controlled deformable mirrors by using a wavefront aberration and distance measurement phase camera in different environments using Fourier Slice **characterized** according to claim 1, for obtaining the three-dimensional phase map associated to the group of atmospheric turbulent layers which affect an earth-based telescopic astronomical observation.
